Europäisches Patentamt

European Patent Office

Office européen des brevets

(11) Veröffentlichungsnummer: **0 145 914**
A2

# (12) EUROPÄISCHE PATENTANMELDUNG

(21) Anmeldenummer: 84113168.3

(51) Int. Cl.⁴: **E 04 B 1/00**, F 16 L 5/02

(22) Anmeldetag: 02.11.84

(30) Priorität: 10.11.83 DE 3340673
07.02.84 DE 3404157

(43) Veröffentlichungstag der Anmeldung: 26.06.85
Patentblatt 85/26

(84) Benannte Vertragsstaaten: AT CH DE FR LI NL

(71) Anmelder: MANIBS R. Mannesmann GmbH & ibs Nagel GmbH & Co. KG., Lempstrasse 24,
D-5630 Remscheid-Bliedinghausen (DE)

(72) Erfinder: Rummler, Dieter, Ing. grad.,
Albert-Stolte-Strasse 31, D-4290 Bocholt-Suderwick (DE)
Erfinder: Hüning, Rolf, Prof. Dr.-Ing., Im Hasfeld 2a,
D-4430 Steinfurt-Burgsteinfurt (DE)

(74) Vertreter: Patentanwälte Schulze Horn und Hoffmeister,
Goldstrasse 36, D-4400 Münster (DE)

(54) Verkapselte Leitungsdurchführung durch eine Gebäudewand oder Bodenplatte.

(57) Verkapselte Leitungsdurchführung durch eine Gebäudewand, mit einer in einem Metall-Kapselrohr (6) liegenden Anschlußleitung (2) und mit einem Kapselrohr (6). Das Kapselrohr (6) ist direkt mit der Außenseite eines installationsseitigen, medienführenden Metallrohres (13) abgedichtet verbunden. Sein nach außen zeigendes Ende ist mit einer dichtschließenden, eine Durchführung für die Anschlußleitung (2) aufweisenden Kappe (5) gegenüber Mauerwerk und Erdreich verschlossen. In das Kapselrohr (6) ist von der Hausseite her das Metallrohr (13) von der Außenseite her ein Kunststoffrohr (2) eingeführt. Innerhalb des Kapselrohres (6) ist eine auf Zug und Torsion beanspruchbare, die Rohrenden verbindende Rohrkupplung (15) eingebaut. Die Leitungsdurchführung wird in einen Formstein (8) eingebaut und zu einem Fertigbauelement vereint.

## Verkapselte Leitungsdurchführung durch eine Gebäudewand oder Bodenplatte

Die Erfindung betrifft eine verkapselte Leitungsdurchführung durch eine Gebäudewand oder Bodenplatte, mit einer in einem Metall-Kapselrohr liegenden Anschlußleitung und mit einem Kapselrohr, das mit Teilen der hausseitigen Anschlußleitung dicht verbunden ist. Unter Anschlußleitung wird eine Gas- oder Wasseranschlußleitung verstanden.

Aus der DE-OS 30 46 353 ist eine Gas-Hausanschlußvorrichtung bekannt, bei der das im Erdreich verlegte Kunststoffrohr mit dem im Haus verlegten Stahlrohr über eine Verbindungsarmatur verbunden wird. Als Kapselrohr, das gerade oder gekrümmt sein kann, wird ein Stahlrohrstück verwendet, das an eine Buchse geschweißt ist, die Teil der Verbindungsarmatur ist. Die Verbindungsarmatur besteht aus der die Dichtungselemente aufnehmenden, auf einer Seite mit einem Innengewinde, auf der anderen Seite mit einem verengten Querschnitt versehenen Buchse und einer in diese Buchse eingeschraubten Hülse, die mit Außengewinde versehen ist und am Ende einen Sechskant aufweist. Mit Hilfe der Hülse werden die Dichtungselemente im Inneren der Buchse mit Druck beaufschlagt und so eine Verbindung zwischen dem Kunststoffrohr und dem Stahlrohr hergestellt. Die Verbindung zwischen Kunststoffrohr und Hausrohr liegt demnach an der Gebäude-Innenwand, wobei sich bei Abriß durch Außeneinwirkung, z. B. Baggerschäden, das Gas in das Gebäude einströmen kann. Auch für diesen Fall, daß außerhalb des Gebäudes die Leitung zerrissen wird und ein Brand ausgelöst wird, ist keine zuverlässige Abschirmung des Gebäudes gegen brennendes Gas gegeben.

Es stellt sich damit die Aufgabe, eine verkapselte Gas-Leitungsdurchführung anzugeben, bei der im Brandfall oder bei einem mechanischen Schaden kein Gas von der Rohrleitung her bzw. durch die Leitungsdurchführung in den Innenraum des Gebäudes einströmen kann. Insbesondere soll auch vermieden werden, daß im Falle eines Brandes brennbare Teile der Hausanschlußleitung im Anschlußkeller selbst beschädigt werden.

Die Anordnung und der Einbau der Leitungsdurchführung soll sowohl von der Seite als auch von unten durch einen Kriechkeller oder eine nicht-unterkellerte Bodenplatte durchgeführt werden können. Sie soll weiterhin ohne wesentliche technische Änderungen auch für eine Wasser-Leitungsdurchführung verwendet werden können.

Diese Aufgaben werden bei einer verkapselten Leitungsdurchführung der eingangs genannten Art dadurch gelöst, daß das Kapselrohr direkt mit der Außenseite eines installationsseitigen, gasführenden Metallrohres gasdicht verbunden ist und daß das nach außen zeigende Ende des Kapselrohres mit einer dichtschließenden, eine Durchführung für die Anschlußleitung aufweisenden Kappe gegenüber Mauerwerk und/oder Erdreich verschlossen ist.

Insbesondere wird als Metallrohr ein Eisen- oder Stahlrohr verwendet; die Verwendung von Messingrohren (z. B. MS 58 oder MS 63) erscheint aber ebenfalls möglich.

Als eine wesentliche Voraussetzung für die Minderung der Schadensgefahr wird angesehen, daß in einem Hause sowohl die Gas- als auch die Wasserleitungseinführung nach dem erfindungsgemäßen Prinzip durchgeführt ist, so daß mögliche Schwachstellen von vornherein vermieden werden.

Von der Hausseite her wird ein Metall-, vorzugsweise ein Stahlrohr, so in das Kapselrohr eingebaut, daß Kunststoffteile der Gas- oder Wasserleitung nicht im Inneren des Hauses vorhanden sind. Dabei ergeben sich grundsätzlich zwei Ausführungsformen:

A) In das Kapselrohr ist von der Hausseite her das Metallrohr und von der Außenseite her ein Kunststoffrohr eingeführt; innerhalb des Kapselrohres ist eine auf Zug und Torsion beanspruchbare, die Rohrenden verbindende Rohrkupplung eingebaut; die gesamte "Rohrkapsel" wird mit allen Einbauten montiert anschlußfertig geliefert;

B) das von der Hausseite kommende Stahlrohr wird durch das Kapselrohr und durch die Kappe geführt und erst jenseits der Außenwand (vom Gebäudeinneren gesehen) mit einem Zuführungsrohr gekuppelt. Auch hier kann die gesamte "Rohrkapsel" mit allen Einbauten anschlußfertig montiert werden.

C) Wird das Kapselrohr durch die Bodenplatte von unten geführt, dann kann es auch gekrümmt eingebaut werden.

Weitere Einzelheiten, die sich in den Unteransprüchen finden, werden anhand der Beschreibung zweier Ausführungsbeispiele erläutert. Die Figuren der Zeichnung zeigen im einzelnen:

Figur 1 eine erste Ausführungsform mit einer Rohrkupplung innerhalb des Kapselrohres;

Figur 2 eine zweite Ausführungsform mit einer Rohrkupplung (nicht dargestellt) außerhalb des Kapselrohres;

Figuren 3 und 4 analoge Ausführungsformen zu den Figuren
1 und 2, jedoch mit gekrümmtem Kapselrohr.

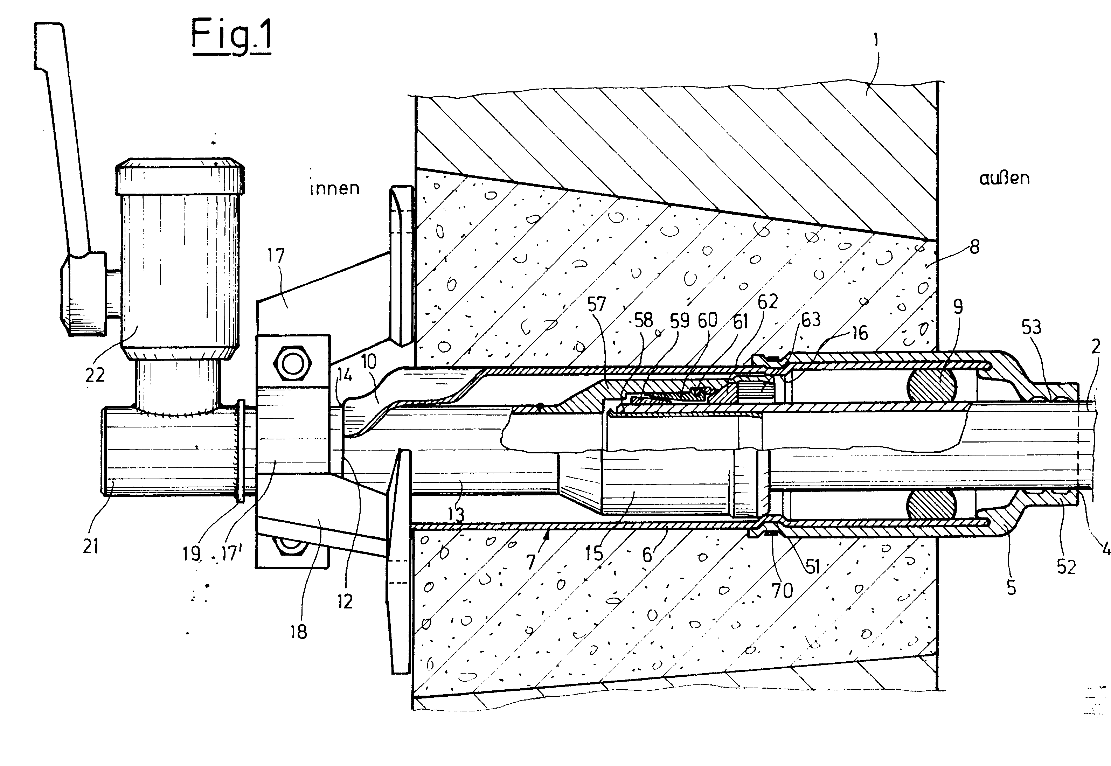

In der Figur 1 ist ein Teil einer Gebäudewand 1 dargestellt, bei der "Innen" und "Außen" entsprechend bezeichnet sind. Durch das außenliegende Erdreich ist an
die Gebäudewand ein Gasleitungsrohr 2 aus High Density-
Polyethylen (HDPE) geführt, beispielsweise in einer der
üblichen Nennweiten DN 25, DN 40 oder DN 50. Das Gasleitungsrohr 2 zweigt von einer (nicht dargestellten) Versorgungsleitung ab und ist mit dieser beispielsweise im
Elektrofitting- oder Muffenschweiß-Verfahren verbunden.
Die Abzweigung ist schematisch mit 3 bezeichnet. Das
Gasleitungsrohr 2 tritt durch eine Öffnung 4 einer zylindrischen Kappe 5 ein, wobei um die Öffnung 4 ein
Kragen 52 herum angeordnet ist. Das Gasleitungsrohr
reicht bis in ein durch die Gebäudewand 1 ragendes
stählernes Kapselrohr 6. Die Kappe 5 besteht aus einem
gummielastischen Werkstoff, beispielsweise Perbunan; sie
kann jedoch auch aus Gummi, Polyvinylchlorid oder Polyethylen-Schrumpfschlauch bestehen. Die Kappe 5 übergreift das Ende des Kapselrohres 6 mit einer Einschiebnut 51 und verjüngt sich zum Kragen hin, der mit mehreren Dichtungsrippen 53 an seiner Innenseite versehen
ist.

Das Kapselrohr 6, das auf beiden Seiten des Wanddurchbruches übersteht, besteht vorzugsweise aus verzinktem
Stahl oder aus einem nichtrostenden Edelstahl, wobei das
Kapselrohr 6 mit einer aufgerauhten Oberfläche 7 oder
mit einer anderen haftungsverbessernden Oberflächenstruktur versehen ist (Noppen, Spiralstege oder dergleichen). Damit wird ermöglicht, daß sich die Kapsel sehr innig mit dem sie umgebenden Mauerwerk bzw. mit dem Beton- oder Asbest-Zementwerkstoff (keramisches Material) verbindet, aus dem ein keramischer Formstein 8 besteht, der das zylindrische Kapselrohr 6 umgibt. Auch andere keramische oder gemischte Baustoffe, beispielsweise sogenannter Polymer-Beton, können verwendet werden. Durch den umgebenden Formstein 8 wird der Widerstand gegen Ausreißen und Verdrehen des unter der eingesetzten Kapselrohre beträchtlich erhöht.

Insgesamt hat das Kapselrohr eine zylindrische, längliche Form, wobei sein Durchmesser auf das technisch notwendige Maß, bezogen auf den jeweiligen Durchmesser des Leitungsrohres 2, abgestimmt ist. Um einen Begriff von den vorliegenden Abmessungen zu geben, seien für zwei verschiedene Nenndurchmesser Beispiele angeführt:

| Nennwert des Leitungsrohres | Lichte Weite des Kapselrohres | Wanddicke des Kapselrohres |
|---|---|---|
| DN 25 | ca. 60 - 65 mm | ca. 2 - 3 mm |
| DN 50 | ca. 100 mm | ca. 3 - 5 mm |

Das nach außen zeigende Ende des Kapselrohres 6 ist offen und mit der bereits erwähnten Kappe 5 verschlossen. Um das Gasleitungsrohr 2 ist im Bereich der Kappe 5 die im Kappeninneren liegende Leitung 2 mit einem umlaufenden Rollringdichtung 9 gegen das Kapselinnere hin abgedichtet. Auch andere Dichtungsarten können verwendet werden, z. B. Preßringe oder Quetschverschraubungen.

Auf der Hausinnenseite ragt das Kapselrohr 6 mit seinem Ende 10 aus der Gebäudewand 1 bzw. aus dem keramischen Block 8 heraus, wobei es sich konisch verjüngt. Es verbleibt eine runde Öffnung 12, in die von der Hausinnenseite her ein Stahlrohr 13, das Teil der installationsseitigen, mediumführenden Anschlußleitung ist, hineingeführt ist. Im Bereich der Öffnung 12 wird von dem Kapselrohr 6 zur Außenseite des Stahlrohres 13 eine gas- und wasserdichte Verbindung in Form einer Schweißnaht 14 gebildet. Damit bilden Kapselrohr 6 und eingeschobenes Stahlrohr 13 ein Ganzes, das zu einer sehr hohen Festigkeit des eingekapselten Gebildes führt. Das aus Kapselrohr 6, Kappe 5 und Stahlrohr 13 bestehende Gebilde wird auch als "Rohrkapsel" bezeichnet.

Das Stahlrohr 13 ist bis kurz vor das Ende des Kunststoffrohres 2 geschoben. Dort ist über beide Rohrenden innerhalb des Kapselrohres 6 eine auf Zug und Torsion beanspruchbare, die Rohrenden verbindende zugfeste Rohrkupplung 15 montiert. Derartige, Kunststoff- und Stahlrohre verbindende Kupplungen sind an sich bekannt und können käuflich erworben werden. Im vorliegenden Fall besteht die Rohrkupplung aus Kupplungsgehäuse 57, das mit dem Rohrende verschweißt ist, aus einem Stützrohr 58, einem Konus-Klemmring 59, einer Konus-Buchse 60, einem Federring 61, einem Konusring 62 und einem Einpreßring 63, die in der aus der Zeichnung ersichtlichen Art und Weise zusammengefügt sind.

Unmittelbar vor der nach außen zeigenden Stirnseite der Rohrkupplung 15 ist im Inneren des Kapselrohres 6 ein Anschlag 16 vorgesehen, der im Ausführungsbeispiel als Walznut ausgestattet ist. In die Walznut-Vertiefung ist ein Klemmring 70 eingezogen, der den Kappenrand fest abdichtend auf die Außenseite des Kapselrohres 6 drückt. Anstelle einer Walznut können auch Flanschen oder einge- schraubte Ringe verwendet werden.

Als Schutz gegen das Herausziehen der Rohrkapsel ist auf der Innen(Keller)-seite des Mauerwerkes eine z. B. dreibeinige Ausziehsicherung 17 angebracht, die beispielsweise als mehrteiliges Tempergußteil hergestellt ist.

Ein zentrischer Ringteil 17' ist in sternförmiger Anordnung mit den drei Schuhen 18 verbunden, die mit Bohrungen versehen sind, so daß auf der Innenseite des Blocks 18 Bolzen eingetrieben und befestigt werden können. Die Ausziehsicherung 17 kann jedoch auch ohne Befestigung mit einem gewissen Spiel auf das Rohrende aufgeteckt werden. Weiterhin ist ein Anlaufring 19 diesseits (von innen gesehen) der Ausziehsicherung 17 fest auf das Rohrende aufgeschweißt, so daß bei Zugeinwirkung auf die Rohrkapsel die Ausziehsicherung 17 gegen den Anlaufring 19 drückt. Der Mantel des Formsteins 8 verläuft etwas konisch in Richtung Außenseite und bildet damit ein weiteres, unüberwindliches Hindernis beim Herausziehen der Leitungsdurchführung, da eher der Formstein 8 oder ein Mauerstück mit der Rohrkapsel als diese allein herausgezogen werden können.

Der Montagebereich zwischen Ausziehsicherung 17 und Stahlrohr 13 ist elektrisch isoliert, beispielsweise durch eine auf das Stahlrohr aufgebrachte Schrumpffolie. Auch die Ausziehsicherung selbst kann durch einen Lack- oder Kunststoffüberzug (Kunststoffschuh(4) nach außen isoliert sein.

Auf der Kellerseite ist über ein Stahl-T-Stück, das mit einem Einschweißstopfen 21 verschlossen ist, ein Kugelhahn 22 aufgesetzt, an den sich wiederum das hausseitige Installationsrohr (nicht dargestellt) anschließt. Das gesamte dargestellte Teil, von der Bezugszahl 3 bis zur Bezugszahl 22, kann als Ganzes geliefert und vormontiert werden und bildet damit ein preisgünstig zu lieferndes Fertigteil.

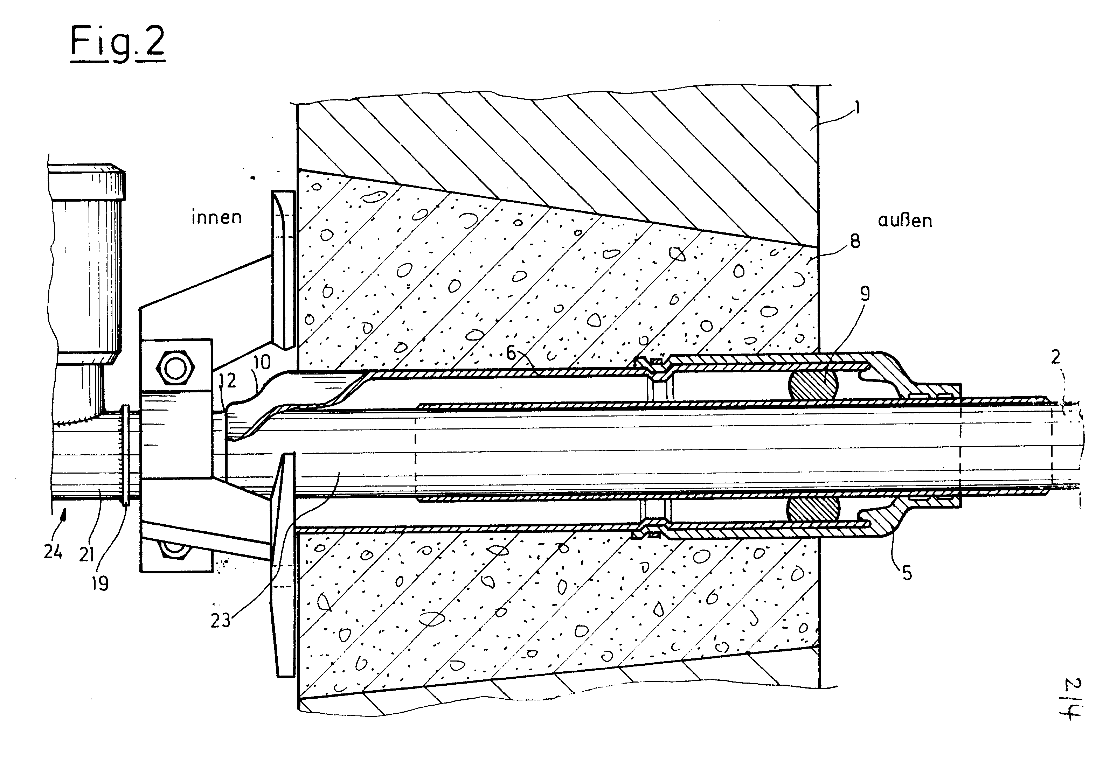

Figur 2 zeigt im wesentlichen ein analog zu der Leitungsdurchführung gemäß Figur 1 aufgebautes Element. Hier ist allerdings das von der Hausseite kommende Stahlrohr 23 ein Wasserrohr, welches durch das Kapselrohr 6 und die Kappe 5 geführt und jenseits der Außenwand mit einem Wasserzuführungsrohr gekuppelt ist (Kupplung nicht dargestellt), wobei die Anschlußmöglichkeiten durch die Bezugszahl 24 angedeutet sind.

Auch hier erfolgt eine zentrische Lagerung und Abdichtung durch eine Rollringdichtung 9. Das Kapselrohr 6 besteht auch hier aus Edelstahl oder feuerverzinktem Stahl unter Beachtung der DIN 30 675 oder der DIN 2 444. Die äußere Oberfläche ist so gestaltet, daß sich eine gute Haftung im Block 8 ergibt. Die Auszugssicherung 17 ist analog zu der der Figur 1 gestaltet. Das Stahlrohr 23 endet bei 24 beispielsweise in einem Schweißende oder mit einem Gewindeanschluß nach DIN 2999, Teil 1. An der Innenseite sind ähnlich wie bei Figur 1 Installations-Bauteile angeschraubt, angeschweißt oder angeflanscht.

Die Kappe 5 besteht ähnlich wie bei der der Figur 1 aus Gummi, Perbunan, Polyvinylclorid ode Polyethylen-Schrumpfschlauch oder ähnlichen Materialien. Sie dichtet und isoliert das offene Ende des Kapselrohres 6 ab gegen das Erdreich und ragt bis in das Mauerwerk hinein. Auch hier kann die Rohrkapsel in einen Beton- oder Asbest-Zement-Block eingegossen oder bauseitig zusammengestellt werden.

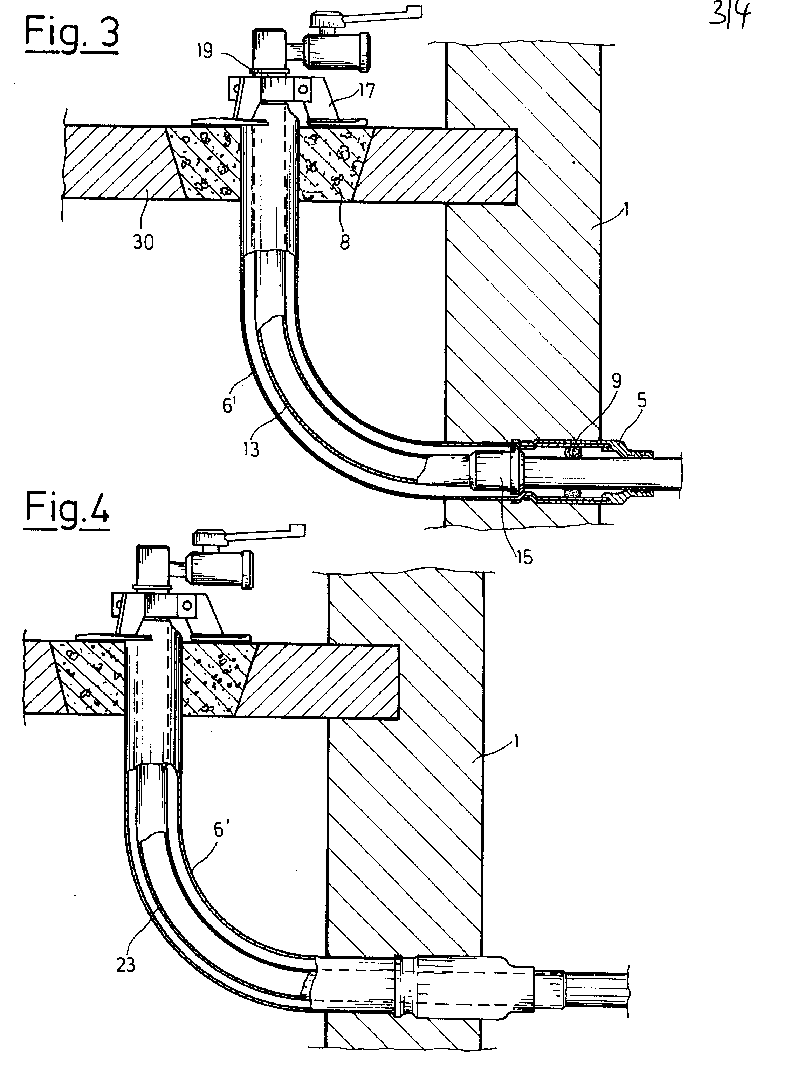

Figur 3 zeigt in analoger Darstellung zu der Figur 1 eine Leitungsdurchführung, die mit einem gekrümmten Kapselrohr 6' ausgestattet ist, das durch eine Bodenplatte 30 hindurchgeführt ist. Auch hier ist ein keramischer Block 8 vorgesehen, der das Ende des Kapselrohres aufnimmt und der mit einer Ausziehsicherung 17 verbunden ist.

Im übrigen ähneln die Teile im wesentlichen denen der Figur 1, so daß auch gleiche Bezugszahlen eingesetzt sind.

0145914

Ähnliches gilt für Figur 4. Hier ist eine gekrümmte Durchführung vorgesehen, bei der das von der Hausseite kommende Stahlrohr durch das Kapselrohr 6' und die Kappe 5 geführt und erst jenseits der Außenwand mit einem Zuführungsrohr gekuppelt ist. Auch hier kann die gesamte Rohrkapsel mit allen Einbauten anschlußfertig vormontiert werden. Zum Unterschied gegenüber dem Kapselrohr gemäß Figur 2 ist das Kapselrohr 6' der Figur 4 gekrümmt durch eine Bodenplatte 30 und die Außenwand 1 geführt.

Die besonderen Vorteile der vorstehend beschriebenen Leitungsdurchführungen seien noch einmal zusammengestellt:

1. Es können Zugkräfte aufgenommen und übertragen werden, die bei der Ausführungsform gemäß Figur 1 sogar größer als die Materialkennwerte des Kunststoff-Rohrs sein können.

2. Im Brandfall kann kein Gas oder Wasser durch das Kapselrohr in den Innenraum des Anschlußkellers strömen. Die Leckrate beträgt praktisch Null.

3. Bei einem mechanischen Schaden an der Hausanschlußleitung kann kein Gas oder Wasser durch die Schweißnaht 14 in das Haus strömen.

4. Korrosion an gas- oder wasserführenden Teilen sowie an der Rohrkapsel innerhalb des Mauerwerkes werden ausgeschlossen.

5. Einbaumängel, hervorgerufen durch unsachgemäße Montage von Einzelteilen, können ausgeschlossen werden, wenn das Bauteil komplett werksseitig vorgefertigt angeliefert wird. Hierbei ergeben sich auch reduzierte Montagekosten. Wesentlich ist auch, daß der Block 8 gleichzeitig sowohl eine Gas- als auch eine Wasser-

0145914

durchführung und im Bedarfsfall Öffnungen für andere Versorgungsträger (LVU, Post oder dergl.) aufnehmen kann.

6. Torsionsmomente werden nicht auf die Bauteile der Inneninstallation übertragen.

7. Die resultierenden Zugkräfte werden in hervorragender Weise in die Wand abgeleitet, wenn eine mechanische Beanspruchung von außen auf die Rohrdurchführung ausgeübt wird.

8. Brandgefahr ist weitgehend unterdrückt, da keine brennbaren Leitungsteile im Anschlußkeller auftreten. Die Hauseinführung ist im Sinne der gültigen Vorschriften und Richtlinien feuerfest.

Die vorstehende Leitungsdurchführung ist insbesondere für Gas- und Wasserrohre gedacht. Der Erfindungsgedanke kann auch ausgedehnt werden auf andere Zwecke, beispielsweise für chemische Medien, die in chemischen Anlagen über Rohrleitungen geführt werden. Das Kapselrohr und das von der Hausseite kommende Rohr sind vorzugsweise aus Stahl, eventuell rostfreiem Stahl, hergestellt. Es können auch andere Materialien eingesetzt werden, z. B. Messing (MS 58 oder MS 63). Die Verbindung des Kapselrohres mit dem von der Hausseite kommenden Rohr erfolgt vorzugsweise durch Verschweißen. Bei den entsprechenden Materialien kann auch ein Hartlöten oder ein Verkleben erfolgen. Die Kunststoffrohre können verschiedene, für derartige Installationen zugelassene und bekannte Rohrmaterialien umfassen. Für Wasser kann auch ein Low-Density-Rohr (LDPE) verwendet werden.

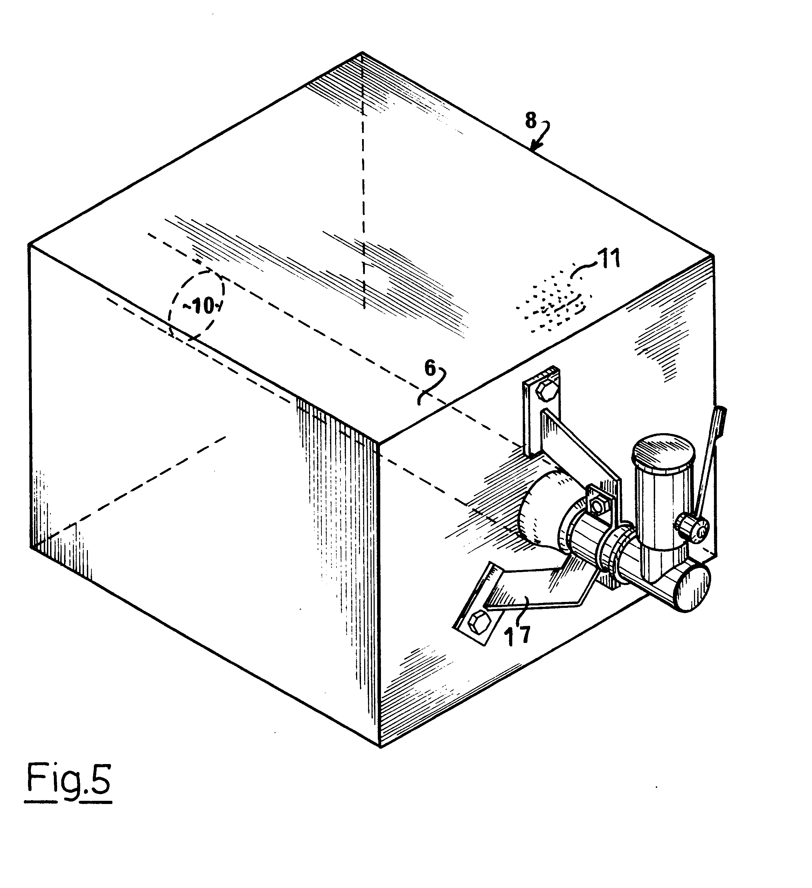

Figur 5 zeigt ein Ausführungsbeispiel einer Leitungsdurchführung mit einem Formstein 8. Der Formstein 8 soll sowohl leicht in bestehende Lücken eingebaut als auch in das Mauerwerk eingefügt werden können. Dabei soll eine relativ hohe Ausreißsicherheit erreicht werden. Um das Einfügen zu verbessern, wird der Formstein 8 an seiner Außenseite besandet oder so strukturiert, daß die Außenseiten in ihrer Haftungseigenschaft gegenüber Mörtel oder Beton wesentlich verbessert sind. Die Außenseite des Formsteines ist besandet, wobei die Sandkörner von der Polymerbeton-Masse gehalten sind. Diese aufgerauhte Oberflächenstruktur ist durch die Bezugszahl 11 bezeichnet. Darüber hinaus können andere haftungsverbessernde Oberflächenstrukturen an den Außenseiten des Formsteins 8 eingebracht werden, beispielsweise Waffelungen oder Rillen.

Von der Anpassung her eignet sich am besten ein Formstein in Quaderform, wie dargestellt. Die Abmessungen des Formsteines ergeben sich aus den bekannten Modulmaßen eines Mauerwerkverbandes, die als Baunormmaße festgelegt sind. Der Durchmesser der Aufnahmeöffnung für die Rohrkapsel kann ebenfalls variabel gestaltet sein.

Figur 5 zeigt einen quaderförmigen Formstein 8, der aus gasdichtem Polymerbeton hergestellt ist. Die Abmessungen des Formsteines für übliche Ausführungsformen (I ... III) betragen beispielsweise (in cm):

|        | I   | II   | III |
|--------|-----|------|-----|
| Höhe   | 24  | 24   | 24  |
| Breite | 24  | 48   | 48  |
| Tiefe  | 24  | 36,5 | 24  |

Auch größere Abmessungen und Sondermaße sind herstellbar.

Der Formstein 8 ist für eine Leitungsdurchführung durch eine Gebäudewand oder eine Bodenplatte vorgesehen. Als vorgefertigtes Bauteil oder nachträglich an der Baustelle wird in den Formstein ein z. B. Metall-Kapselrohr 6 abgedichtet eingelegt, wobei die Abdichtung durch einen nach dem Aushärten gasdichten Klebemörtel bewirkt wird. Hierzu eignet sich beispielsweise: Kunststoffveredelter Zement-Sand-Klebemörtel, Beton-Kleber oder dergleichen.

Mit dem Klebemörtel oder Kleber kann der Ringraum zwischen Kapselrohr-Außenseite und Aufnahmeöffnung völlig abgedichtet werden. Der Einbau des Kapselrohres in einen Formstein kann werksseitig vorgefertigt werden.

Wenn z. B. während der Rohbauarbeiten eine starke Verschmutzung oder Beschädigung des im Formstein eingebauten Kapselrohres zu befürchten ist, kann anstelle des Formsteines auch ein Schaumstoff-Quader als Platzhalter eingesetzt und eingemauert werden, der nach Fertigstellung der Rohbauarbeiten ersetzt wird durch den Formstein 8.

Der Formstein wird als Grundelement mit nur einer einzigen Aufnahmeöffnung 10 geliefert. Es ist jedoch auch möglich, diesen ohne Aufnahmeöffnung zu liefern, darüber hinaus weitere Aufnahmeöffnungen zu bohren oder bestehende Aufnahmeöffnungen aufzubohren. Grundsätzlich sind die Durchmesser der Bohrungen variabel, d. h. es sind auch Formsteine mit meheren Öffnungen unterschiedlichen Durchmessers möglich.

Mit Hilfe der beschriebenen Ausziehsicherung 17 kann beim Einbau des Kapselrohres 6 eine genaue Zentrierung und Achsenausrichtung des Kapselrohres 6 vorgenommen werden.

- - -

Patentansprüche:

1. Verkapselte Leitungsdurchführung für eine Gasleitung durch eine Gebäudewand oder Bodenplatte, mit einer in einem Metall-Kapselrohr liegenden Anschlußleitung und mit einem Kapselrohr, das mit Teilen der hausseitigen Anschlußleitung dicht verbunden ist, dadurch gekennzeichnet, daß das Kapselrohr (6) direkt mit der Außenseite eines installationsseitigen, medienführenden Metallrohres (13; 23) gasdicht verbunden ist und daß das nach außen zeigende Ende des Kapselrohres (6) mit einer dichtschließenden, eine Durchführung für die Anschlußleitung aufweisende Kappe (5) gegenüber Mauerwerk und/oder Erdreich verschlossen ist.

2. Leitungsdurchführung nach Anspruch 1, dadurch gekennzeichnet, daß das Metallrohr (13; 23) ein Stahlrohr ist, das mit dem ebenfalls aus Stahl bestehenden Kapselrohr (6) verschweißt ist.

3. Leitungsdurchführung nach Anspruch 1 oder 2, dadurch gekennzeichnet, daß in das Kapselrohr (6) von der Hausseite her das Metallrohr (13) und von der Außenseite her ein Kunststoffrohr (2) eingeführt sind und daß innerhalb des Kapselrohres (6) eine auf Zug und Torsion beanspruchbare, die Rohrenden verbindende Rohrkupplung (15) eingebaut ist.

4. Leitungsdurchführung nach Anspruch 3, dadurch gekennzeichnet, daß vor der nach außen zeigenden Stirnseite der Rohrkupplung (15) im Inneren des Kapselrohres (6) ein Anschlag (16) vorgesehen ist.

5. Leitungsdurchführung nach Anspruch 4, dadurch gekennzeichnet, daß die Kappe (5) im Bereich ces Anschlages (16) durch einen Klemmring (70) auf dem Kapselrohr gesichert ist.

6. Leitungsdurchführung nach Anspruch 1, dadurch gekennzeichnet, daß das von der Hausseite kommende Stahlrohr (23) durch das Kapselrohr (6) und die Kappe (5) geführt und jenseits der Außenwand mit einem Medienzuführungsrohr verbunden ist.

7. Leitungsdurchführung nach Anspruch 1 bis 4, dadurch gekennzeichnet, daß das Kapselrohr (6) nach innen und außen aus der Gebäudewand ragt.

8. Leitungsdurchführung nach Anspruch 1 bis 7, dadurch gekennzeichnet, daß das Kapselrohr (6) sich zu einem Verbindungskragen (bei Schweißnaht 14) hin konisch verjüngt.

9. Leitungsdurchführung nach Anspruch 1 bis 8, dadurch gekennzeichnet, daß vor der Verbindungsnaht (14) eine Ausziehsicherung (17) montiert ist, die gleichzeitig Montagehilfe ist.

10. Leitungsdurchführung nach Anspruch 1, dadurch gekennzeichnet, daß das im Kapselrohr (6) liegende Rohr (2; 23) mit wenigstens einer umlaufenden Dichtung (9) gegen die Kapselrohrinnenwand abgedichtet ist.

11. Leitungsdurchführung nach einem der vorhergehenden Ansprüche, dadurch gekennzeichnet, daß das Kapselrohr (6) aus rostfreiem Stahl hergestellt ist.

12. Leitungsdurchführung nach einem der vorhergehenden Ansprüche, dadurch gekennzeichnet, daß das Kapselrohr (6) außenseitig mit einer haftungserhöhenden Struktur, insbesondere mit aufgerauhter Oberfläche (7) versehen ist.

13. Leitungsdurchführung nach einem der vorhergehenden Ansprüche, dadurch gekennzeichnet, daß bei Durchführung durch eine Bodenplatte (30) ein gekrümmtes Kapselrohr (Figur 3 und 4) eingesetzt ist.

14. Leitungsdurchführung nach einem der vorhergehenden Ansprüche, dadurch gekennzeichnet, daß das Kapselrohr (6) von einem aus keramischen Werkstoff bestehenden, in das Mauerwerk einzufügenden Formstein (8) umgeben ist.

15. Leitungsdurchführung nach Anspruch 14, dadurch gekennzeichnet, daß der Formstein (8) wenigstens eine axial angeordnete, zylindrische Aufnahmeöffnung (10) besitzt, in der das Kapselrohr (6) mit Hilfe eines im ausgehärteten Zustande nicht-brennbaren Klebers oder Mörtels gehalten ist.

16. Leitungsdurchführung nach Anspruch 14, dadurch gekennzeichnet, daß der Formstein (8) durch Besandung (11) oder Strukturierung haftungsverbesserte Außenseiten besitzt.

17. Leitungsdurchführung nach Anspruch 14, dadurch gekennzeichnet, daß der Formstein (8) Pyramidenstumpf- oder Quaderform besitzt.

Fig.1

# Fig.2

innen                    außen

**Fig. 3**

**Fig. 4**

Fig.5